(19) Europäisches Patentamt

European Patent Office

Office européen des brevets

(11) Publication number: **0 194 863 B1**

# EUROPEAN PATENT SPECIFICATION

(45) Date of publication of patent specification: **25.09.91**　(51) Int. Cl.⁵: **A21C 11/10, A21C 9/08**

(21) Application number: **86301754.7**

(22) Date of filing: **11.03.86**

(54) Method of and apparatus for depositing viscous material onto a conveyor.

(30) Priority: **12.03.85 AU 9673/85**

(43) Date of publication of application:
**17.09.86 Bulletin 86/38**

(45) Publication of the grant of the patent:
**25.09.91 Bulletin 91/39**

(84) Designated Contracting States:
**CH DE FR GB LI**

(56) References cited:
**EP-A- 0 130 748**
**GB-A- 1 418 699**
**US-A- 3 106 173**
**US-A- 3 988 096**
**US-A- 4 449 908**

(73) Proprietor: **Hicks, Kevin Joseph**
**29-33 King Street**
**Hornsby New South Wales 2077(AU)**

(72) Inventor: **Hicks, Kevin Joseph**
**29-33 King Street**
**Hornsby New South Wales 2077(AU)**

(74) Representative: **Howden, Christopher Andrew et al**
**FORRESTER & BOEHMERT Widenmayer-strasse 4/I**
**W-8000 München 22(DE)**

## Description

This invention relates to an apparatus for depositing measured quantities of viscous material onto a conveyor.

The invention has particular application within the food processing industry for depositing food mix onto a conveyor which transports deposits of the mix through a baking oven, and the invention is hereinafter described in such context. However, it will be understood that the invention does have broader application in the food processing industry, for example in depositing viscous material onto a conveyor which transports the material through a refrigerating chamber.

In a typical baking process applicable to cakes, biscuits or cookies, a pre-blended dough or mix is loaded into a hopper and is extruded through a transverse array of dies at the underside of the hopper. The hopper houses a pair of counter-rotating rollers which are rotated at periodic intervals, whereby the mix is forced simultaneously through each of the dies. During each operating cycle, when a predetermined amount of mix has been extruded through the dies, a reciprocating wire cutter severs the extruded mix from that remaining in the dies. The severed portions (i.e., deposits) of the mix then fall onto a conveyor which passes below the dies and the conveyor transports the deposits, arrayed in rows and columns, through a baking oven. The conveyor typically comprises a series of baking trays which extend tranversely between and are carried by two parallel endless conveyor chains.

The above described process yields more-or-less acceptable results when the food mix has a smooth dough-like consistency. However, when the mix contains additives in the form of fruit, nuts, bran, shredded coconut or the like, it has been found that the wire cutter does not make a clean cut through the extruded material. This results in the formation of non-uniform deposits on the conveyor and, because some of the deposits tend to stick to the wire cutter or resist its cutting action, the deposits in a given row may be randomly staggered across the width of the conveyor. This creates problems at the product removal station, after the deposits have passed through the baking oven, and it may even result in some of the mix deposits falling through the gap between adjacent trays.

In an alternative deposition process, a number of pistons is employed in lieu of the reciprocating wire cutter for pushing quantities of the food mix through an array of dies and in a direction toward a conveyor. However, this process does not solve the above problem because the mix tends to stick to the underside of the pistons and, with different constituents in the mix at the underside of the respective pistons, the deposits drop onto the conveyor at different time intervals. Therefore, here again, the deposits forming a given row across the conveyor may be randomly staggered.

The present invention seeks to avoid the above problems by providing an apparatus for depositing measured quantities of a food mix onto a conveyor and which incorporates a twin-blade shearing mechanism for severing deposits of the food mix after they have been extruded through dies and so that the deposits may then fall downwardly onto the conveyor.

GB-A-1418699 and US-A-3106173 both disclose product depositing mechanisms which incorporate twin shearing blades. However, in both disclosures a single pair of shearing blades is provided to sever simultaneously a plurality of extruded products, and the blades extend and move in a direction transverse to the direction of movement of associated conveyors. Also, the blades themselves function to provide extrusion orifices for the product, and in GB-A-1418699 apertures within the shearing blades constitute the sole means of extruding the product. Furthermore, the blades which are disclosed in both of the referenced documents may in operation be subjected to a compressive loading when performing a severing operation.

EP-A-0130748 discloses a product depositing mechanism which has extrusion dies in addition to a severing mechanism, but the severing mechanism is arranged to effect formation of surface coated products and is both functionally and structurally different from the shearing mechanism of the present invention.

The present invention provides an apparatus for depositing a viscous food mix onto a conveyor and which comprises a retainer for loading with the viscous food mix, an array of dies extending in a direction transverse to the direction of movement of the conveyor, the array of dies being located between the underside of the retainer and the conveyor for receiving the viscous food mix from the retainer and directing successive corresponding arrays of deposits of the viscous food mix onto the conveyor in lines which extend transversely of the conveyor. Extruding means are provided for periodically extruding a predetermined quantity of the viscous food mix downwardly from the retainer and into and through the dies, and shearing means which comprise two thin overlapping blades which are movable linearly in mutually opposite directions are provided for severing from the viscous food mix received from the dies the deposits of food mix that are extruded through the dies. The apparatus is characterised in that one said shearing means is located at the underside of each of the dies, in that the overlapping blades are carried by a groove in a fixed guide block which is located below the array of dies and are slidable longitudinally in the direction of movement of the conveyor between first and second positions, in that each blade is formed with an aperture which is sized to pass without interference the deposits of the viscous food mix when the apertures in the overlapping blades are aligned, in that drive means are provided for driving the two overlapping blades of each shearing means between the first position in which the apertures are aligned and the second position in which the apertures are moved completely out of alignment to effect severing of the viscous food mix, and in that the two blades of each shearing means are coupled to the drive means in a manner such that, when being moved from the first to the second position, a pulling force is applied to both of the blades in order that a tensile loading will be applied to the blades in the event that anything within the viscous food mix tends to impede their movement.

The hole in each blade may be circular but it preferably is polygonal.

The retainer into which the food mix is loaded would normally comprise a hopper and an array of dies would normally be located at the underside of a single hopper.

The invention will be more fully understood from the following description of an apparatus which is suitable for use in depositing cookie mix onto conveyor trays which are intended to carry the mix into and through a baking oven. The description is provided with reference to the accompanying drawings wherein:

Figure 1 shows a side elevation view of a hopper and an associated depositing mechanism located above a baking tray conveyor system,

Figure 2 shows an end elevation view of the arrangement which is illustrated in Figure 1, as seen in the direction of arrow 2 in Figure 1,

Figure 3 shows a sectional side elevation view of a lower portion of the hopper and the depositing mechanism, with a pair of shearing blades located in a first position,

Figure 4 shows a view which is similar to that of Figure 3 but with the shearing blades in a second position,

Figure 5 shows a perspective view of the shearing blades and a drive mechanism therefor, the arrangement being removed from the remaining portion of the hopper/depositing mechanism, and

Figure 6 shows a detailed perspective view of a portion of the arrangement which is shown in Figure 5.

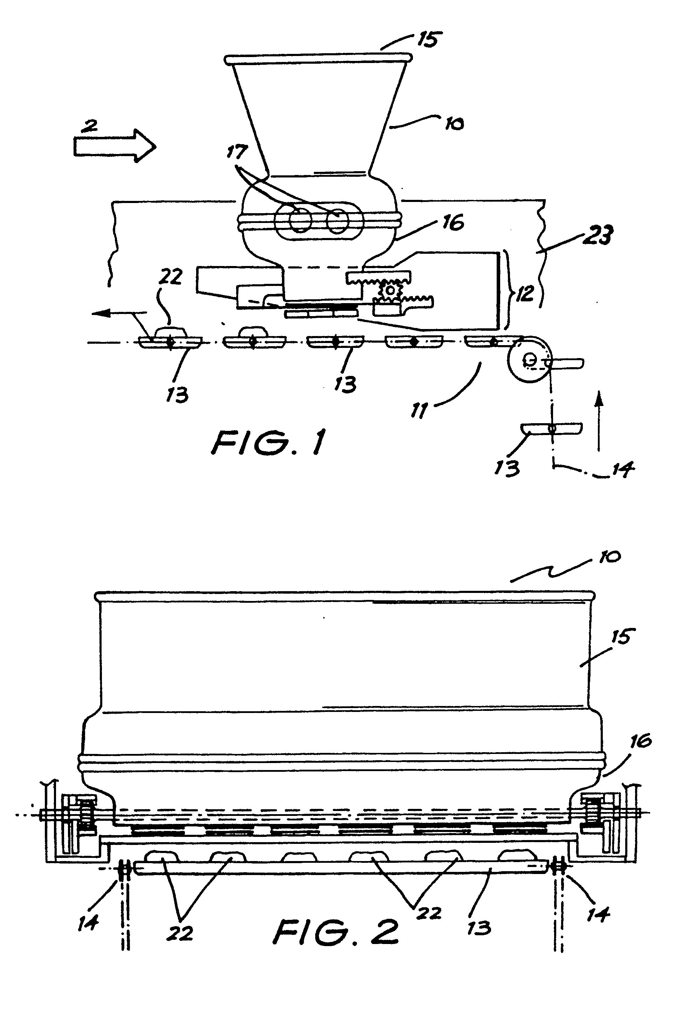

As illustrated, the apparatus comprises a hopper 10, a conveyor system 11 which is driven to move past the underside of the hopper 10, and a mechanism 12 which is operated to deposit cookie mix onto the conveyor system 11 from the hopper 10. The conveyor system comprises a plurality of trays 13 which are carried by a pair of spaced-apart parallel endless conveyor chains 14, and the conveyor system is driven continuously to move into and through an oven chamber (not shown). Metered quantities of the cookie mix are deposited onto the successive trays 13 as they pass below the hopper/depositing mechanism, and the deposits are carried through the oven chamber where they are baked as required. After baking, the resultant cookies are removed from the trays at an unloading station, and the empty trays are carried back to the starting position shown in Figure 1.

The hopper 10 comprises an upper portion 15 into which the cookie mix is loaded and a lower portion 16 through which the mix is progressively extruded. The lower portion 16 of the hopper houses a pair of counter-rotating rollers 17 which are turned at periodic intervals and which force the mix through each of six transversely arrayed dies 18. The dies are fitted with removable liners 19 which may be interchanged with other liners to modify the effective diameter or the cross-sectional shape of mix which is extruded through the dies. Rotation of the rollers 17 is synchronised with advancement of the conveyor 11, so that the cookie mix is extruded through the dies 18 as successive trays approach the underside of the dies.

When a predetermined quantity of the cookie mix has been extruded through each of the dies 18, shearing blades 20 and 21 which are located below each of the dies are actuated to shear the extruded mix, and the resulting severed portion (deposits) 22 of the mix fall onto the conveyor trays 13. The mechanism is arranged such that six aligned deposits 22 of the mix fall onto each tray at the same time.

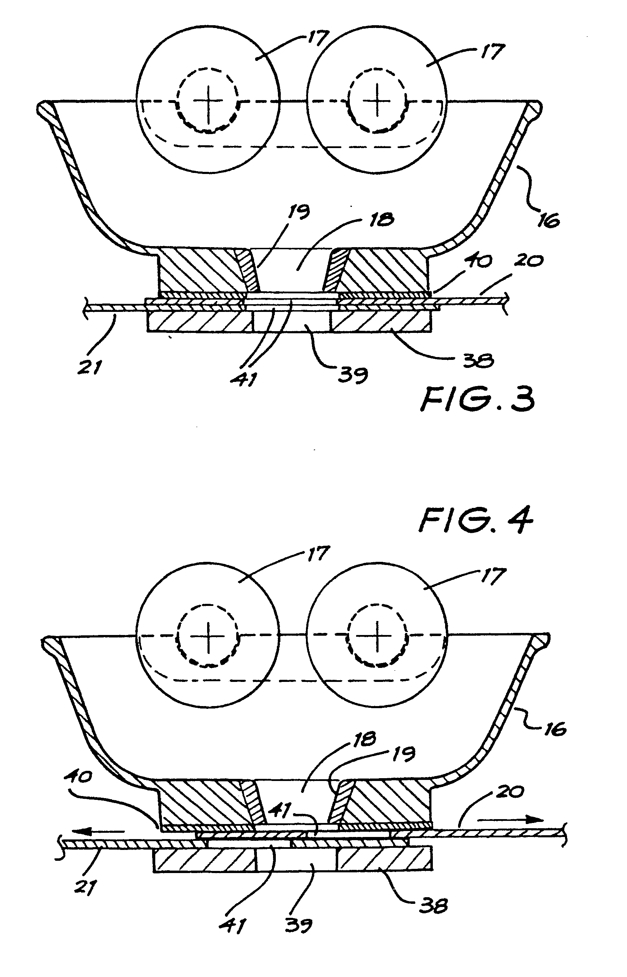

Figure 3 of the drawings shows the shearing blades 20 and 21 in a first position, and Figure 4 shows the same blades in a second position. When the blades are in the first position the cookie mix may be extruded through the die 18 and in a direction toward the conveyor trays 13. However, when the blades are actuated into their second position, further extrusion of the cookie mix is temporarily prevented and that mix which has already been extruded through the die is severed by the blades so that it may drop onto the conveyor trays.

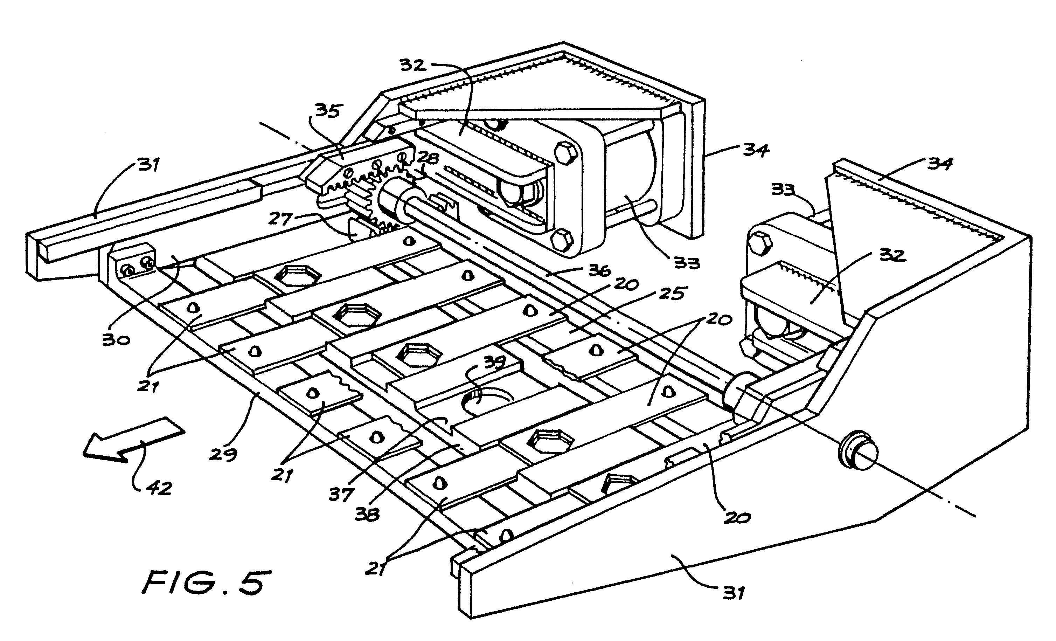

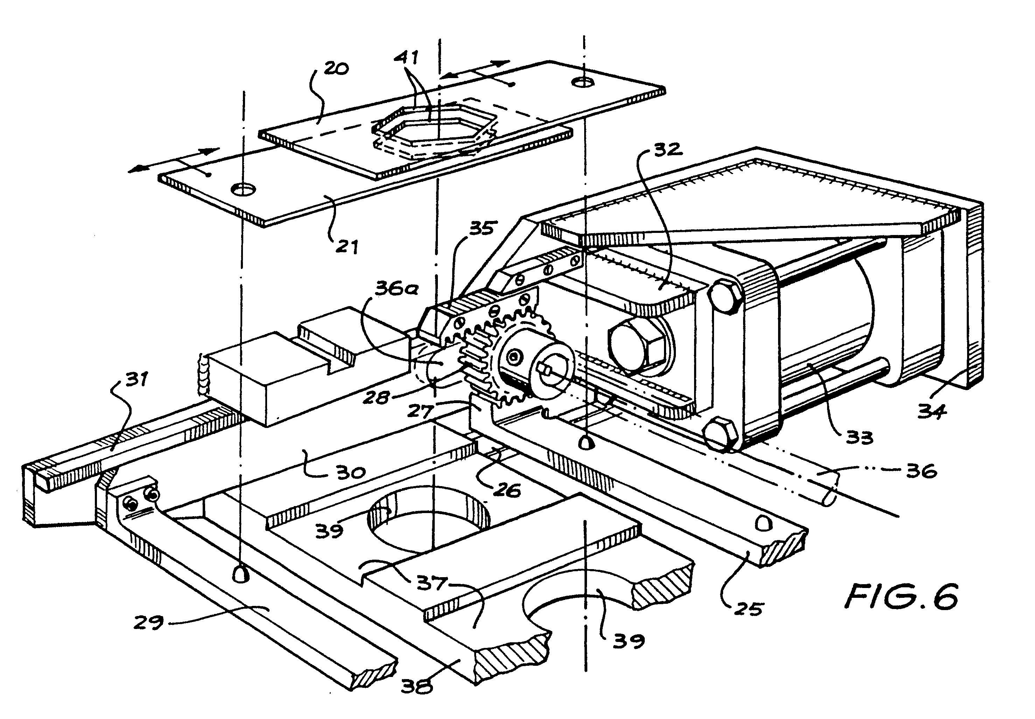

The depositing mechanism 12, including the shearing blades 20, 21 and associated actuating apparatus, is shown in greater detail in Figures 5 and 6. The depositing mechanism 12 is mounted directly below the lower portion 16 of the hopper, and it is affixed as a sub-assembled unit to the side walls 23 (Figure 1) of a structure which houses the complete mechanism.

As shown in Figures 5 and 6, the shearing blades 20 are removably mounted to a first blade carrier bar 25 which is in turn supported at its opposite ends on slides 26. Also, a driven rack 27 is mounted to each end of the blade carrier 25, each rack being engaged by a rotatable pinion 28. Rotary motion of the pinions causes linear motion to be imparted to the racks and, thus, to the blade carrier 25 and the blades 20.

The shearing blades 21 are removably mounted to a second blade carrier bar 29 which is supported at each of its ends by arms 30. The arms 30 are slidably supported by and are carried by side plates 31 which are affixed to the side walls 23 (Figure 1) of the structure.

The arms 30 are L-shaped and the shorter leg 32 of each arm is connected to a respective double-acting pneumatic cylinder 33. The pneumatic cylinders are mounted to inwardly projecting legs 34 of the side plates 31.

A drive rack 35 is mounted to each of the arms 30 and, in operation of the mechanism, the drive racks 35 function to impart motion to the driven racks 27 by way of the pinions 28. The pinions 28 at the opposite sides of the mechanism are connected by a live axle 36, this ensuring that the blade carrier 25 always remains parallel with the blade carrier 29 during actuation of the mechanism. The axle 36 is journalled in the side plates 31 and the arms 30 are slotted at 36a to permit rectilinear movement of the arms 30 relative to the axle.

The two shearing blades 20 and 21 of each pair are mounted one above the other and the respective pairs of blades are located within grooves 37 in a guideblock 38. The guideblock 38 extends between the side plates 31 and is located in a fixed positon below the transversely arrayed dies 18. Six apertures 39 are formed within the guideblock 38, each aperture being located in one of the grooves 37 and having a diameter larger than that of the largest likely die insert 19.

The upper surface of the guideblock 38 is mounted against a sole plate 40 (Figures 3 and 4) of the hopper and, thus, the shearing blades 20 and 21 are constrained against all but reciprocating movement within the grooves 37.

The shearing blades 20 and 21 are formed from thin stainless steel sheet and, as best seen from Figure 6 of the drawings, the blades of each pair are mounted one above the other in each of the grooves 37. Each of the blades is formed with a polygonal (hexagonal) aperture 41, and when the blades are in a first position (as shown in Figures 3, 5 and 6), the apertures 41 in the respective blades are aligned. When the blades are moved into a second positon (as shown in Figure 4) the apertures 41 are moved out of alignment.

In operation of the apparatus, the pneumatic cylinders 33 are initially retracted to the position shown in Figures 5 and 6, so that the apertures 41 in each of the pair of overlapping plates are aligned. This condition is shown in Figure 3 and, when the rollers 17 are rotated through a preselected angle, a predetermined quantity of cookie mix is extruded through the die 18, the apertures 41 and the opening 39. The quantity of mix which is extruded is determined by the degree of rotation of the rollers 17.

Immediately following extrusion of the predetermined quantity of cookie mix, the pneumatic cylinders are actuated to an extended position and this results in the arms 30 being moved to the left, in the direction indicated by arrow 42 in Figure 5. The driving racks 35 move to the left with the arms and cause the pinions 28 to rotate in a counterclockwise direction. This in turn causes the driven racks 27 to move to the right or, in other words, in the opposite direction to that of the driving racks 35.

Thus, the shearing blades 20 and 21 are caused to move in mutually opposite directions to the positon shown in Figure 4. The apertures 41 in the blades are caused to move out of alignment and the mix which previously was extruded through the apertures is sheared by the blades. The severed portion of the mix then falls from below the blades to deposit on the trays 13 of the conveyor, to be carried into the oven.

An important feature of the invention is that, although the forces will normally be quite small, any resistance to movement of the blades during the cutting stroke will cause a tensile load (rather than a compressive load) to be induced in the blades.

When the shearing operation is complete, the pneumatic cylinder is again actuated to a retracted position and the mechanism is restored to the condition shown in Figure 3 so that a further batch of cookie mix may be extruded through the dies from the hopper.

## Claims

1. An apparatus for depositing a viscous food mix onto a conveyor (11); the apparatus comprising:

   a retainer (10) for loading with the viscous food mix;

   an array of dies (18) extending in a direction transverse to the direction of movement of the conveyor (11), the array of dies (18) being located between the underside of the retainer (10) and the conveyor (11) for receiving the viscous food mix from the retainer (10) and directing successive corresponding arrays of deposits of the viscous food mix onto the conveyor (11) in lines which extend transversely of the conveyor (11);

extruding means (17) for periodically extruding a predetermined quantity of the viscous food mix downwardly from the retainer (10) and into and through the dies (18); and

shearing means (12) comprising two thin overlapping blades (20 and 21) which are movable linearly in mutually opposite directions for severing from the viscous food mix received by the dies (18) the deposits of food mix that are extruded through the dies (18);

characterised in that one said shearing means (12) is located at the underside of each of the dies (18), in that

the overlapping blades (20 and 21) are carried by a groove (37) in a fixed guide block (38) which is located below the array of dies (18) and are slidable longitudinally in the direction of movement of the conveyor (11) between first (Figure 3) and second (Figure 4) positions, in that each blade is formed with an aperture (41) which is sized to pass without interference the deposits of the viscous food mix when the apertures (41) in the overlapping blades (20 and 21) are aligned, in that drive means (27, 28 and 35) are provided for driving the two overlapping blades (20 and 21) of each shearing means (12) between the first position (Figure 3) in which the apertures (41) are aligned and the second position (Figure 4) in which the apertures (41) are moved completely out of alignment to effect severing of the viscous food mix, and in that the two blades (20 and 21) of each shearing means (12) are coupled to the drive means (27, 28 and 35) in a manner such that, when being moved from the first (Figure 3) to the second (Figure 4) position, a pulling force is applied to both of the blades (20 and 21) in order that a tensile loading will be applied to the blades (20 and 21) in the event that anything within the viscous food mix tends to impede their movement.

2. The apparatus as claimed in claim 1 further characterised in that the aperture (41) in each blade has a polygonal circumference.

3. The apparatus as claimed in claim 1 or claim 2 further characterised in that the shearing means (12) are all driven by a common drive mechanism (33).

4. The apparatus as claimed in claim 3 further characterised in that one of the blades (20) associated with each of the shearing means (12) is carried by a first carrier bar (25) and wherein the other blade (21) associated with each of the shearing means (12) is carried by a second carrier bar (29).

5. The apparatus as claimed in claim 4 further characterised in that the first carrier bar (25) is driven to move back and forth by a double acting fluid actuated cylinder (33) and in that the second carrier bar (29) is coupled to the first carrier bar by way of a rack and pinion mechanism (27, 28 and 35) such that it is driven to move in a mutually opposite direction to that of the first carrier bar (25).

6. The apparatus as claimed in claim 5 further characterised in that the guide block (38) is formed with apertures (39) which align with the respective dies (18) and with the apertures (41) in the blades (20 and 21) when the blades are in the first position (Figure 3).

7. The apparatus as claimed in any one of claims 1 to 6 further characterised in that the retainer (10) is in the form of a hopper and wherein the means for extruding the food mix through the or each die (18) comprises a pair of counterrotating rollers (17) which are located within the hopper (10), the rollers when turned through a preselected angle being operable to force a predetermined quantity of food mix through the or each die (18).

## Revendications

1. Dispositif pour déposer un mélange visqueux de nourriture sur un convoyeur (11), le dispositif comprenant :
   - un récipient (10) pour charger le mélange visqueux de nourriture ;
   - une rangée de filières (18) s'étendant dans une direction tranversale à la direction de mouvement du convoyeur (11), la rangée de filières (18) étant située entre le dessous du récipient (10) et le convoyeur (11) pour recevoir le mélange de nourriture visqueux à partir du récipient (10) et diriger des rangées correspondantes successives de dépôts du mélange visqueux de nourriture sur le convoyeur (11), selon des lignes qui s'étendent transversalement par rapport au convoyeur (11) ;
   - des moyens d'extrusion (17) pour extruder périodiquement une quantité prédéterminée du mélange visqueux de nourriture vers le bas à partir du récipient (10), dans et au travers des filières (18) ; et
   - des moyens de cisaillement (12) comprenant deux fines lames se recouvrant (20 et 21) qui sont mobiles linéairement dans des directions mutuellement opposées pour détacher du mélange visqueux de nourriture reçu par les filières (18), les dépôts des mélanges de nourriture qui sont extrudés au travers des filières (18) ;

caractérisé en ce que chacun desdits moyens de cisaillement (12) est situé sur le dessous de chacune des filières (18), en ce que les lames se recouvrant (20 et 21) sont portées par un sillon (37) dans un bloc de guidage (38) qui est situé en dessous de la rangée de filières (18), et peuvent coulisser longitudinalement dans la direction du mouvement du convoyeur (11) entre une première (figure 3) et une seconde (figure 4) positions, en ce que chaque lame est formée avec une ouverture (41) qui est dimentionnée pour permettre le passage sans interférence des dépôts du mélange visqueux de nourriture lorsque les ouvertures (41) des lames se recouvrant (20 et 21) sont alignées, en ce que des moyens d'entraînement (27, 28 et 35) sont prévus pour entraîner les deux lames se recouvrant (20 et 21) de chaque moyen de cisaillement (12) entre la première position (figure 3), dans laquelle les ouvertures (41) sont alignées, et la seconde position (figure 4), dans laquelle les ouvertures (41) sont déplacées complètement hors d'alignement, pour effectuer le découpage du mélange visqueux de nourriture, et en ce que les deux lames (20 et 21) de chaque moyen de cisaillement (12) sont couplées aux moyens d'entraînement (27, 28 et 35) d'une façon telle que, lorsqu'elles sont déplacées depuis la première (figure 3) jusqu'à la seconde (figure 4) position, une force de traction est appliquée aux deux lames (20 et 21), afin qu'un effort de tension soit appliqué aux lames (20 et 21) au cas où quelque chose à l'intérieur du mélange visqueux de nourriture tendrait à gêner leur mouvement.

2. Dispositif selon la revendication 1, caractérisé en outre en ce que l'ouverture (41) de chaque lame a une circonférence polygonale.

3. Dispositif selon la revendication 1 ou la revendication 2, caractérisé en outre en ce que les moyens de cisaillement (12) sont tous entraînés par un mécanisme d'entraînement commun (33).

4. Dispositif selon la revendication 3, caractérisé en outre en ce que l'une des lames (20) associée à chacun des moyens de cisaillement (12) est portée par une première barre de support (25), et dans lequel l'autre lame (21) associée à chacun des moyens de cisaillement (12) est portée par une seconde barre de support (29).

5. Dispositif selon la revendication 4, caractérisé en outre en ce que la première barre de support (25) est entraînée pour se déplacer vers l'arrière et vers l'avant par un cylindre (33) actionné par un fluide à double action, et en ce que la seconde barre de support (29) est couplée à la première barre de support au moyen d'un mécanisme à crémaillères et pignons (27, 28 et 35) tel qu'elle soit entraînée pour se déplacer dans une direction opposée à celle de la première barre de support (25).

6. Dispositif selon la revendication 5, caractérisé en outre en ce que le bloc de guidage (38) est formé avec des ouvertures (39) qui sont alignées avec les filières respectives (18) et avec les ouvertures (41) dans les lames (20 et 21) lorsque les lames sont dans la première position (figure 3).

7. Dispositif selon l'une quelconque des revendications 1 à 6, caractérisé en outre en ce que le récipient (10) a la forme d'une tremie, et dans lequel les moyens d'extrusion du mélange de nourriture au travers de la ou de chaque filière (18) comprennent une paire de rouleaux contra-rotatifs (17) qui sont disposés à l'intérieur de la tremie (10), les rouleaux étant actionnables de façon à forcer une quantité prédéterminée de mélange de nourriture au travers de la ou de chaque filière (18) lorsqu'ils tournent d'un angle prédéterminé.

**Patentansprüche**

1. Vorrichtung zum Aufbringen einer fließfähigen Lebensmittelmasse auf ein Förderband (11), wobei die Vorrichtung aufweist:
   - einen Behälter (10) zur Beschickung mit der fließfähigen Lebensmittelmasse,
   - ein Feld von Formen (18), die sich in einer Richtung quer zur Bewegungsrichtung des Förderbandes (11) erstrecken, wobei das Feld von Formen (18) zwischen der Unterseite des Behälters (10) und dem Förderband (11) angeordnet ist zur Aufnahme der fließfähigen Lebensmittelmasse von dem Behälter (10) und zum Ausrichten aufeinanderfolgender entsprechender Felder von Mengen der fließfähigen Lebensmittelmasse auf dem Förderband (11) in Reihen, die sich quer zu dem Förderband (11) erstrecken,

- Extrusionsmittel (17) zum periodischen Extrudieren einer vorgegebenen Menge der fließfähigen Lebensmittelmasse aus dem Behälter (10) nach unten und durch die Formen (18), und
- Schermittel (12) mit zwei dünnen, einander überlappenden Blättern (20 und 21), die linear und einander entgegengerichtet beweglich sind zum Trennen der durch die Formen (18) extrudierten Mengen der Lebensmittelmasse von den von den Formen (18) aufgenommenen Futtermengen,

dadurch gekennzeichnet, daß

- ein Schermittel (12) an der Unterseite jeder der Formen (18) angeordnet ist,
- die sich überlappenden Blätter (20, 21) von einer Kerbe (37) in einem ortfesten, unterhalb des Feldes von Formen (18) angeordneten Führungsblock (38) getragen werden und längs der Bewegungsrichtung des Riemenförderers (11) zwischen einer ersten Position (Fig. 3) und einer zweiten Position (Fig. 4) gleitbar sind,
- jedes Blatt mit einer Öffnung (41) versehen ist, die zum störungsfreien Passierenlassen der Mengen der fließfähigen Lebensmittelmasse bei miteinander ausgerichteten Öffnungen (41) der einander überlappenden Blätter (20 und 21) bemessen ist,
- Antriebsmittel (27, 28 und 35) zum Antreiben der beiden einander überlappenden Blätter (20 und 21) jedes der Schermittel (12) zwischen einer ersten Position (Fig. 3), in der die Öffnungen (41) miteinander ausgerichtet sind, und einer zweiten Position (Fig. 4), in der die Öffnungen (41) vollständig aus der ausgerichteten Position wegbewegt sind, um ein Abtrennen der fließfähigen Lebensmittelmasse zu bewirken, und
- die beiden Blätter (20, 21) der Schermittel (12) derart an die Antriebsmittel (27, 28 und 35) angekoppelt sind, daß bei einer Bewegung von der ersten (Fig. 3) in die zweite Position (Fig. 4) eine Zugkraft auf beide Blätter (20, 21) aufgebracht wird, um eine Spannungsbeanspruchung auf die Blätter (20, 21) aufzubringen, wenn irgendetwas in der Lebensmittelmasse deren Bewegung behindert.

2. Vorrichtung nach Anspruch 1, weiter dadurch gekennzeichnet, daß der Umfang jeder der Öffnungen (41) vieleckig ist.

3. Vorrichtung nach Anspruch 1 oder 2, weiter dadurch gekennzeichnet, daß alle Schermittel (12) von einem gemeinsamen Antriebsmechanismus (33) angetrieben werden.

4. Vorrichtung nach Anspruch 3, weiter dadurch gekennzeichnet, daß das eine der jedem der Schermittel (12) zugehörigen Blätter (20) von einer ersten Trägerstange (25) und das andere der jedem der Schermittel (12) zugehörigen Blätter (21) von einer zweiten Trägerstange (29) getragen wird.

5. Vorrichtung nach Anspruch 4, weiter dadurch gekennzeichnet, daß die erste Trägerstange (25) durch einen doppelwirkenden, fluidbetriebenen Zylinder (33) angetrieben wird und daß die zweite Trägerstange (29) mit der ersten Trägerstange über einen Zahnstangen/Ritzel-Mechanismus (27, 28 und 35) derart verbunden ist, daß dieser gegenläufig zu der ersten Trägerstange (25) angetrieben wird.

6. Vorrichtung nach Anspruch 5, dadurch gekennzeichnet, daß der Führungsblock (38) mit Öffnungen (39) versehen ist, die mit den jeweiligen Formen (18) und mit den Öffnungen (41) in den Blättern (20 und 21) ausgerichtet sind, wenn die Blätter in ihrer ersten Position sind.

7. Vorrichtung nach einem der Ansprüche 1 bis 6, weiter dadurch gekennzeichnet, daß der Behälter in Form eines Schüttrichters ausgebildet ist, wobei die Mittel zum Extrudieren der Lebensmittelmasse durch die Form oder jede der Formen (18) ein Paar von gegensinnig rotierenden Walzen (17) aufweisen, die in dem Schüttrichter (10) angeordnet sind und bei einer Drehung um einen vorgegebenen Winkel eine bestimmte Menge der Lebensmittelmasse durch die Form bzw. Formen (18) zwingen.

FIG. 1

FIG. 2

FIG.3

FIG.4

FIG.5

FIG.6